# EUROPEAN PATENT SPECIFICATION

(11) **EP 2 990 683 B1**
(45) Date of publication and mention of the grant of the patent: **25.07.2018**
(21) Application number: 15169143.3
(22) Date of filing: 26.05.2015
(51) Int. Cl.: F16D 66/02, B60T 17/22

(54) **ELECTRONIC STROKE SENSOR FOR AIR DISC BRAKE**
ELEKTRONISCHER HUBSENSOR FÜR EINE LUFTSCHEIBENBREMSE
CAPTEUR DE COURSE ÉLECTRONIQUE POUR FREIN À DISQUE À AIR

(30) Priority: 28.05.2014 US 201414289152
(43) Date of publication of application: 02.03.2016
(73) Proprietor: INDIAN HEAD INDUSTRIES, INC., Charlotte, NC 28269 (US)
(72) Inventor: WALLACE, Thomas Edward, Charlotte, NC 28270 (US); RINK, Richard J., Charlotte, NC 28270 (US); SINGLETARY, Glenn, Concord, NC 28027 (US); CHANDLER, Mark David, Bloomfield, NY 14469 (US); SCHARTNER, Andrew P., Charlotte, NC 28262 (US)
(74) Representative: Hohgardt, Martin

(56) References cited:
- US-A- 5 223 708
- US-A- 5 433 296
- US-A1- 2003 222 774
- US-A1- 2005 039 988

## Description

### BACKGROUND OF THE INVENTION

This application is a continuation-in-part of Application No. 14/054,049, filed on October 15, 2013, which is a continuation of Application No. 13/162,691, filed on June 17, 2011, which claims the benefit of U.S. Provisional Patent Application No. 61/356,325, filed on June 18, 2010.

The present invention is related to an electronic brake stroke monitor for a vehicle brake. More specifically, the present invention is related to an electronic brake stroke monitor of an air disc brake for use on a heavy duty truck, transit bus or similar commercial vehicle.

The number of miles traveled by heavy-duty trucks and passenger busses increases significantly every year. Because the size of passenger cars being driven has become smaller due to the increased price of gasoline, it has become increasingly necessary to ensure the proper performance of brake actuators and brake systems of these heavy-duty vehicles to provide the truck operator every opportunity to avoid a loss of control. Therefore, various systems have been developed to monitor the stroke of a brake actuator for use on drum brakes widely used in industrial trucking.

However, on heavy-duty passenger vehicles, such as, for example, busses, the use of air disc brakes is becoming more popular. While broad based monitoring has been achieved for drum brakes, monitoring additional conditions known to cause unsafe driving conditions, such as, for example, low brake pad clearance has not been achieved.

In the prior art, brake monitoring systems are used, such as described in US 2003/0222774 A1. Brake monitoring systems used on air drum brakes are directed toward monitoring the length of stroke of a pushrod projecting from inside a chamber of the brake actuator. The monitoring enables the user to determine if the brake actuator is functioning properly, is subject to an over-stroke condition, or is
subject to a hanging or dragging brake condition. Monitoring these conditions by monitoring the stroke of the pushrod is possible because the pushrod of the brake actuator is fixedly attached to the actuation device of the drum brake. In the case of a hanging or dragging brake, the actuation device of the drum brake is immobilized in an actuated position preventing the pushrod from returning to an un-actuated position when the brake pedal is released by the vehicle operator.

However, the pushrod of an air disk brake actuator is not fixedly attached to the lever arm of a caliper that actuates the disk brake. Therefore, should a hanging or dragging brake condition occur, the lever arm becomes separated from the pushrod rendering the type of monitoring system used on a drum brake non-functional for a disk brake. An electronic sensor that monitors the stroke of the pushrod senses that the pushrod has returned to its un-actuated position and incorrectly senses that the brake is operating normally. Therefore, it has become necessary to develop a vehicle brake monitoring assembly that is capable of identifying and distinguishing between an over-stroke condition and a hanging brake condition of an air disk brake.

### SUMMARY OF THE INVENTION

A vehicle brake monitor assembly for an air disk brake includes a brake actuator having a pushrod projecting from inside a chamber of the brake actuator. The pushrod releasably actuates a lever arm of the caliper moving the disk brake into braking position when the pushrod is disposed in an extended position and releases the disk brake from the braking position when the pushrod is disposed in a retracted position. The pushrod includes a pushrod shaft and a contact member biased in a telescoping relationship relative to the pushrod shaft. The lever arm of the caliper abuts the contact member and counteracts the bias of the contact member preventing the contact member from telescoping from the pushrod shaft. A sensor is integrated with the assembly proximate the contact member. The sensor detects movement of the pushrod relative to the lever arm and the pushrod shaft.

The sensor that is positioned proximate the contact member detects differences in transmission along a length of the contact member that enables the determination of the condition of the brake actuator. For example, the sensor detects when the brake is operating in a normal condition, is subject to a dragging brake condition, is subject to an over stroke condition, or subject to an out of adjustment condition. As set forth above, prior attempts to monitor all these conditions on an air disk brake have proven futile. In particular, prior monitoring devices have been unable to identify a hanging brake condition due to separation between the pushrod and a lever arm of the air disk brake. This separation results when the lever arm is immobilized in an actuated position and a vehicle operator releases a brake pedal causing the pushrod to retract into the brake actuator. The telescoping design of the present invention allows the sensor to detect when the lever arm is immobilized in an actuated position.

A further benefit of the present inventive assembly is its use with a conventional brake caliper without modification to the caliper. Prior attempts to monitor air disk brake systems require modifying the brake caliper in an attempt to determine if the lever arm is immobilized in an actuated position. By providing a sensor pack proximate the pushrod of the actuator, the inventive assembly has eliminated the need to modify the caliper of an air disk brake system, to detect a dragging brake condition.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 shows a side sectional view of the brake monitoring assembly of the present invention;
Figure 2a shows a first embodiment of the pushrod of the
   present invention;
Figure 2b shows an alternative embodiment of the
   pushrod of the present invention;
Figure 3 shows an expanded view of the pushrod of the present invention;
Figure 4 shows the brake actuator in an extended position
   in a normal operating condition;
Figure 5 shows a partial sectional view of the brake
   actuator in an over stroke condition; and
Figure 6 shows the brake actuator of the present invention
   having a hanging or dragging brake condition.

### DETAILED DESCRIPTION OF THE INVENTION

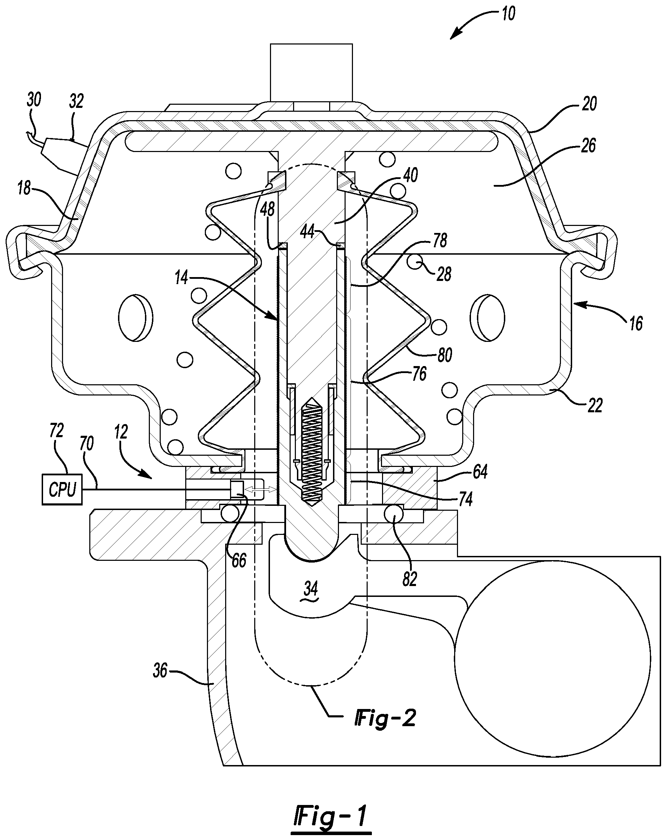

A brake actuator is shown generally at 10 in figure 1. The brake actuator 10 includes a brake monitor assembly 12 for determining if the brake actuator is functioning in a normal condition or a fault condition as will be explained further hereinbelow. The brake actuator 10 includes a pushrod 14 disposed inside a service chamber 16. It should be understood by those skilled in the art that the service chamber 16 can also be used in cooperation with a secondary chamber or power spring chamber (not shown), and various other brake activator configurations, as might be necessary for a given vehicle braking system.

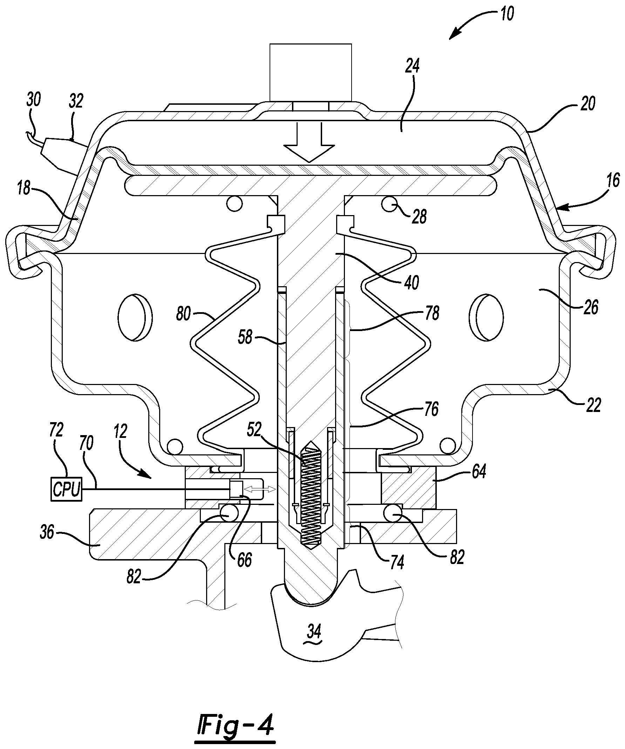

The service chamber 16 includes a diaphragm 18 that is secured between an upper housing member 20 and a lower housing member 22. Therefore, the service chamber 16 is separated by the diaphragm 18 into a pressure side 24 (best seen in Figure 4) and a return side (non-pressure) 26 which houses a return spring 28. Pressurized air enters the pressure side 24 of the service chamber 16 through air pressure port 30, the pressure of which is monitored by pressure sensor 32. Although the pressure sensor 32 is shown proximate the service chamber 16, it is contemplated by the inventors that the pressure sensor 32 is located at the treadle valve (brake pedal) of the vehicle. It should be understood to those of ordinary skill in the art that each embodiment also includes a separate pressure sensor (not shown) located at the brake pedal to identify pressure being applied by the vehicle operator to the brake pedal. When the operator actuates the brake pedal, pressurized air passes through the air pressure port 30 forcing the diaphragm 18 against the pushrod 14 causing the pushrod 14 to extend outwardly from the service chamber 16 in a known manner.

When the vehicle operator depresses the brake pedal, as set forth above, air pressure enters the pressure side 24 of the service chamber 16 through the air pressure port 30 forcing the pushrod 14 outwardly from the service chamber. A lever arm 34 disposed inside a caliper 36 is pivoted by the pushrod 14, when extending outwardly, causing the brakes (not shown) of the vehicle to actuate in a known manner. When the vehicle operator removes pressure from the brake pad, air is vented from the pressure side 24 of the service chamber 16 and the return spring 28 forces the pushrod 14 inwardly of the service chamber 16 allowing the lever arm 34 to return to its unactuated position. It should be understood by those of skill in the art, that the caliper 36 described above functions in a normal manner.

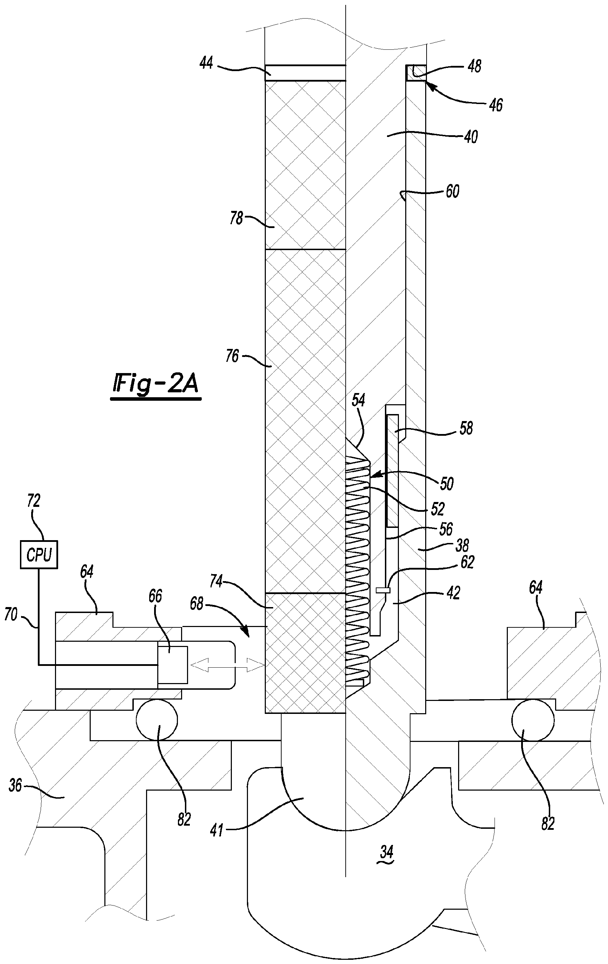

Referring now to Figure 2A, the pushrod 14 includes a contact member 38 that circumscribes a pushrod shaft 40. The contact member 38 defines a terminal end 41 that abuts the lever arm 34 of the caliper 36. The pushrod shaft 40 is received in a tubular opening 42 defined by the contact member 38. An adjustment shim 44 is disposed at a base 46 of the tubular opening 42 and is sandwiched between a shaft stop 48 of the pushrod shaft 40 and the base 46. The adjustment shim 44 is provided in a plurality of thicknesses from which the length of the pushrod 14 is adjusted to provide dimensional accuracy between terminal end 41 of contact member 38 and lever arm 34 as will become more evident below.

The pushrod shaft 40 defines an elongated opening 50, which receives a biasing member 52 shown here in the form of a spring. The biasing member 52 is compressed between a floor 53 and a terminal wall 54 of the elongated opening 50. Therefore, the biasing member 52 provides a biasing force that telescopes the contact member 38 from the pushrod shaft 40, affectively lengthening the pushrod 14.

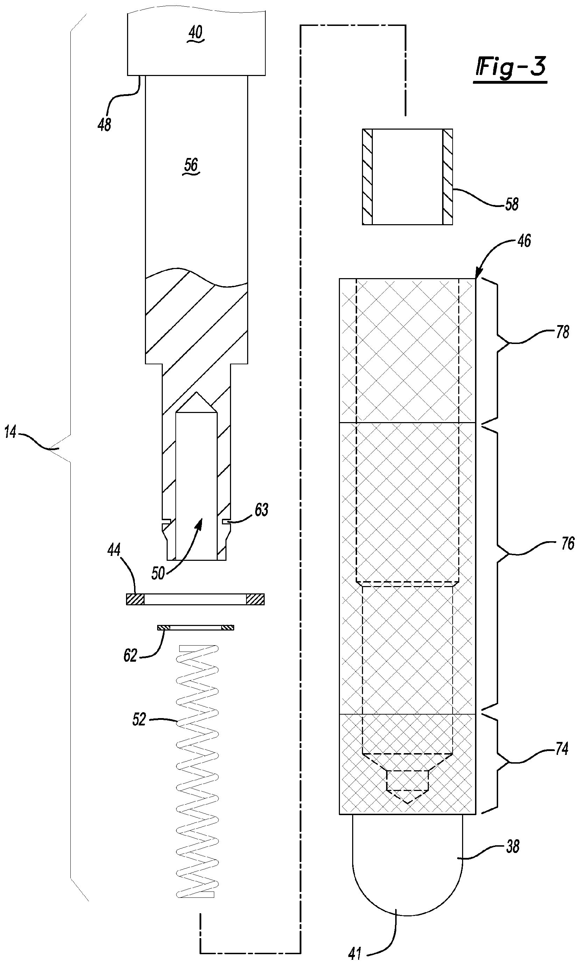

The pushrod shaft 40 defines a circumscribing groove 56 into which a retaining member 58 that is fixedly attached to an inner wall 60 of the tubular member 42 is received. The retaining member 58 slides in an axial direction defined by the pushrod shaft 40 within an expanse of the groove 56. A stop 62 prevents the biasing member 52 from separating the contact member 38 from the pushrod shaft 40 when abutted by the retaining member 58. The stop 62 takes the form of a spring clip or equivalent received by a notch 63 (Figure 3) in the pushrod shaft 40.

A sensor element 64 is sandwiched between the service chamber 16 and the caliper 36. A sensor 66 is disposed inside the sensor element 64 and is provided sensing access to the contact member 38, which is received through an opening 68 in the sensor element 64. The sensor 66 communicates through communication line 70 with a controller or central processing unit 72. The sensor 66 is contemplated by the inventors to take the form an optical sensor, a magnetic sensor, a mechanical sensor, or a radio frequency enhanced sensor. For clarity, however, the following description will describe an optical sensor, further contemplated to be an infrared sensor. The exemplary embodiment makes use of an Optek infrared optical OPB733TR sensor capable of both transmitting an infrared signal and receiving a reflected infrared input. However, it should be understood by those of skill in the art, that any of the sensors explained above are operable. As best represented in Figure 2a, the contact member 38 defines a non-reflective surface 74, a semi-reflective surface 76, and a fully reflective surface 78.

As best seen in Figure 1, a sealing boot 80 seals to the pushrod shaft 40 at an upper end and to the sensor element 64 at an opposite end. Therefore, the contact member 38, and the non-reflective, semi-reflective, and fully reflective surfaces 74, 76, 78 are protected from environmental contamination that is known to enter the service chamber 16. A secondary seal 82 seals the sensor element 64 to the caliper 36, which is fully enclosed to protect the lever arm 34 from environmental contamination. Therefore, the contact member 38 and the sensor 66 are completely protected from the environment, preventing the optical sensor 66 and the reflective surfaces 74, 76, 78 from becoming fouled.

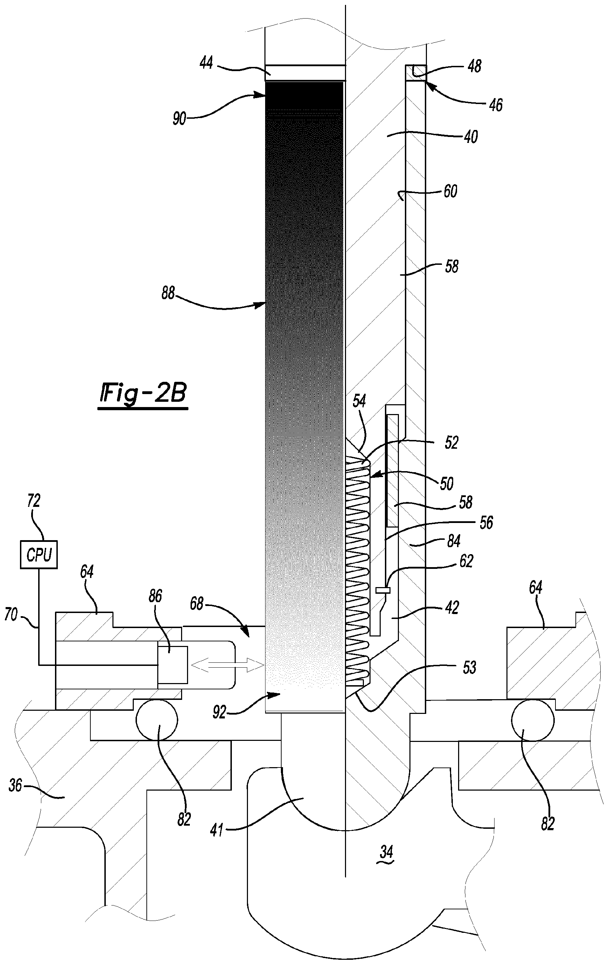

An alternative embodiment is shown in Figure 2b where common elements have the same numbers as those elements disclosed in Figure 2a. The alternative embodiment makes use of an alternative contact member 84 and a linear sensor 86. The alternative contact member 84 includes an alternative reflective coating 88 that has a variable reflective surface. A first end 90 of the contact member is more reflective than a second end 92 of the contact member with a gradual transition in between. The sensor detects the variation in the amount of reflectivity to determine the location of the alternative contact member 84, and therefore the lever arm 34 as will become more evident in the description below.

The sequence of brake monitoring will now be described. It is contemplated by the inventors that the sensor 66 takes the form of an infrared sensor that transmits an infrared signal toward the contact member 38 which has varying degrees of reflectivity as described above to reflect the infrared signal back toward the sensor 66, which in turn signals the controller 72 the degree of reflectivity via communication lines 70. It should be understood to those of skill in the art that other optical sensors may be used, including photoelectric digital lasers, ordinary lasers, and equivalents.

During normal operation, when the brake is released (shown in figure 1), the optical sensor transmits a light signal toward the non-reflective surface 74 of the contact member 38 receiving no reflective signal from the contact member 38. The brake application pressure, as indicated by the pressure sensor 32, is less than or equal to about 2 psi. Therefore, no active fault is signaled to the vehicle operator.

Referring now to Figure 4, pressure is applied to the brake pedal by the operator causing air to fill the pressure side 24 of the service chamber 16 to actuate the lever arm 34. Because the pushrod 14 is forced outwardly from the service chamber 16 by the diaphragm 18, the sensor 66 is positioned proximate the semi-reflective surface 76 of the contact member 38. The pressure sensor 32 signals air pressure of greater than or equal to about 2 psi indicating normal operation of the brake actuator 10 so long as the sensor 66 detects reflectivity from the semi-reflective surface 76. It is contemplated by the inventors that the semi-reflective surface 76 reflects about thirty percent of the light transmitted from the sensor 66. It should be noted that the biasing member 52 remains fully compressed because the lever arm 34 counteracts the biasing force of the biasing member 52 during normal, activated condition.

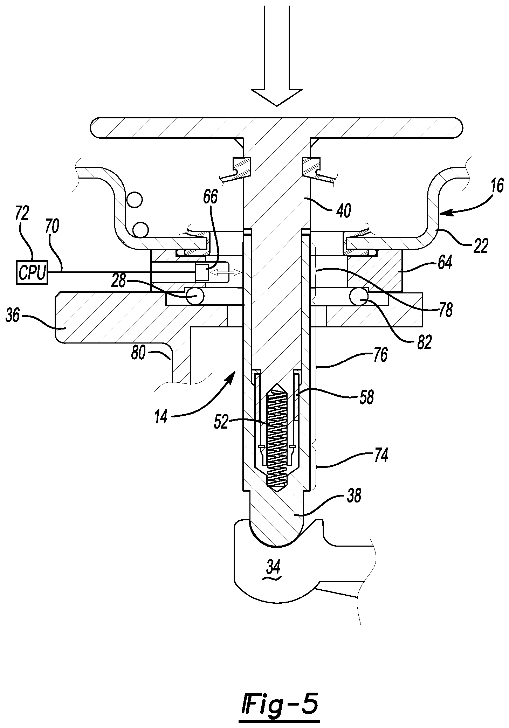

Figure 5 shows an overstroke condition causing the controller 72 to signal the operator that a fault condition exists. In the overstroke condition, the pushrod 14 extends outwardly of the service chamber 16 beyond normal extension length so that the sensor 66 transmits light to the fully reflective surface 78 and detects a full reflectivity. The brake pressure, as detected by the pressure sensor 32, is greater than or equal to about 2 psi. Therefore, the sensor 66 signals the controller 72 full reflectivity with normal application pressure causing the controller to signal an over stroke condition to the operator.

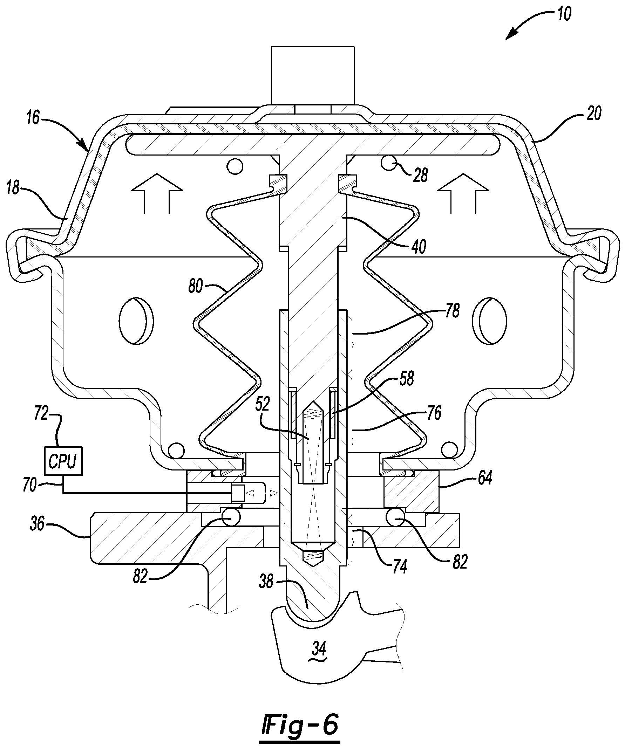

Figure 6 represents a dragging brake condition. The dragging brake condition is identified by the controller 72 both when the vehicle is moving at road speed and when the vehicle is not moving at road speed. In the dragging brake condition, air pressure has been released from the pressure side 24 of the service chamber 16 causing the return spring 28 to retract the pushrod 14 into the service chamber 16. However, because the brake is now subject to a dragging condition, the lever arm 34 is retained in the actuated position causing separation with the contact member 38. Because the lever arm 34 is no longer counteracting the biasing force of the biasing member, the biasing member 52 causes the contact member 38 to telescope from the pushrod shaft 40. Therefore, the sensor 66 now transmits light toward the semi-reflective surface 76 of the contact member 38 as opposed to transmitting light toward the non-reflective surface 74 as is typical of a normally functioning brake. Because the pressurized air has been vented from the pressure side 24 of the service chamber 16, the brake application pressure now reads less than or equal to about 2 psi. The combination of the semi-reflective surface 76 being detected by the sensor 66 and the low air pressure of less than or equal to about 2 psi causes the controller 72 to indicate a dragging or hanging brake condition.

A further fault condition is indicated when the sensor 66 detects the non-reflective surface 74 when the brake pedal is depressed by the operator causing an air pressure reading of greater than or equal to about 12 psi. In this instance, the controller signals a non-functioning actuator condition to the operator.

Calipers used in heavy duty truck applications are typically self-adjusting to maintain a consistent running clearance between the brake pads and the rotor as the brake pad wears down. When functioning properly, the self-adjusting caliper adjusts to maintain consistent clearance as the brake pads wear over time. The self-adjusting caliper is known to malfunction and create an out of adjustment condition where the clearance between the brake pads and the rotor is less than desirable, e.g. less than .6 mm. In this situation, a normal use of the brake system causes faster brake pad wear, unwanted heat generation resulting in fires, or other issues.

An out of adjustment or low lining brake clearance condition can be detected by the controller 72. For example, pressure is applied to the brake pedal by the operator causing air to fill the pressure side 24 of the service chamber 16 to actuate the lever arm 34. Because the pushrod 14 is forced outwardly from the service chamber 16 by the diaphragm 18, the sensor 66 is positioned proximate the semi-reflective surface 76 of the contact member 38. The pressure sensor 32 signals air pressure of greater than or equal to about 2 psi indicating normal operation of the brake actuator 10 so long as the sensor 66 detects reflectivity from the semi-reflective surface 76. As pressure continues to be applied to the brake pedal by the operator, the push-rod and lever 34 reach a hard stop because the brake pad clearance is low due to the out of adjustment condition. Depending on the severity of the out of adjustment condition, the sensor 66 may be positioned proximate the crossover point between the semi-reflective surface 76 and the non-reflective surface 74. In this position, as normal variations in pressure occur the position of the sensor 66 will dither between the semi-reflective surface 76 and the non-reflective surface 74. The combination of dithering and normal air pressure readings causes the controller 72 to indicate an out of adjustment condition. Variations in pressure occur even when the operator attempts to maintain a constant brake pedal position.

False positive out of adjustment signals are reduced by triggering an out of adjustment condition in response to a pre-defined number of pre-cursor out of adjustment faults in combination with a pre-defined number of non-function faults. A pre-cursor fault counter is used to detect the number of dithers between the semi-reflective zone 76 and the non-reflective zone 74 within an ignition cycle. A non-function fault counter is used to detect the number of non-function faults within a controller 72 power cycle. In this embodiment, an out of adjustment condition is identified after a pre-defined number of pre-cursor out of adjustment conditions and a pre-defined number of non-functioning faults are detected. For example, in one embodiment, two pre-cursor out of adjustment faults and two non-function faults trigger an out of adjustment condition.

As set forth above, instead of being non-reflective, semi-reflective, and fully reflective surfaces 74, 76, 78, the surfaces include other pre-defined indicia capable of transmitting light to identify the amount of extension of the pushrod 14. For example, in one embodiment, the surface 76 is a fully reflective surface, while the surfaces 74 and 78 are both non-reflective. In this way, the sensor 66 can provide a binary signal. In such an embodiment, the controller determines there is a fault condition, but additional logic may be implemented to determine the specific fault condition. When the sensor detects a non-reflective surface 74 or 78 during normal brake application pressures and the sensor never detects fully reflective surface 76, then the controller 72 determines the non-reflective surface 74 was detected and the fault is a non-functioning brake fault. When the sensor detects a reflective surface 76 followed by a non-reflective surface 74 or 76 during normal brake application pressures, the controller 72 determines the fault condition is either an over-stroke condition or an out of adjustment condition. In one embodiment, the over-stroke condition and out of adjustment condition is distinguished by monitoring the return stroke of the pushrod. If the sensor detects the fully reflective surface 76 as the pressure falls to the resting pressure, then the controller 72 determines the non-reflective surface 76 was detected and the fault is an over-stroke fault. If the sensor does not detect the fully reflective surface 76 as the pressure falls, then the controller determines the non-reflective surface 74 was detected and the fault is an out of adjustment condition.

The invention has been described in an illustrative manner, and it is to be understood that the terminology that has been used is intended to be in the nature of words of description rather than of limitation.

Obviously, many modifications and variations of the present invention are possible in light of the above teachings. For example, a hall effect or equivalent sensor can be used in combination with a magnet affixed to the contact member 38 having varying degrees of magnetism. It is therefore to be understood that within the specification, the reference numerals are merely for convenience, and are not to be in any way limiting, the invention may be practiced otherwise than is specifically described.

In the following further examples are described to facilitate the understanding of this invention.

In a first further example a method of detecting a fault condition of an air disk brake is described, the method comprising the steps of: providing a brake actuator having a pushrod being extensible from said brake actuator for actuating a lever arm of an air disk brake; monitoring length of extension of said pushrod from said brake actuator; monitoring air pressure of said brake actuator; detecting an out of adjustment fault condition of an air disk brake based on said monitoring length of extension of said pushrod of said brake actuator and said monitoring air pressure of said brake actuator without sensing a condition of the air disk brake. Also, said step of monitoring length of extension of said pushrod might be further defined by sensing variation of indicia disposed upon said pushrod. Also, the method may further include the step of correlating air pressure of said brake actuator with a normal actuated position and a normal retracted position. Also, the method may further include detecting a normal condition by sensing pre-defined indicia on said pushrod in response to sensing air pressure correlated with normal actuated position of said brake actuator. Also, the method may further include detecting an over-stroke condition by sensing pre-defined indicia on said pushrod in response to sensing air pressure correlated with normal actuated position of said brake actuator. Also, the method may further include determining whether a fault condition is said out of adjustment fault condition or said over-stroke condition based on said monitoring length of extension of said pushrod and said monitoring air pressure of said brake actuator during a return stroke of said pushrod. Also, the method may further include detecting a non-functioning condition by sensing pre-defined indicia on said pushrod in response to sensing air pressure correlated with normal actuated position of said brake actuator. Also, the method may further include detecting said out of adjustment fault condition may include sensing a first pre-defined indicia on said pushrod in response to sensing air pressure correlated with normal actuated position of said brake actuator and sensing a second pre-defined indicia on said pushrod in response to sensing air pressure correlated with normal actuated position of said brake actuator. Also, detecting said out of adjustment fault condition may include: detecting a plurality of pre-cursor out of adjustment faults each pre-cursor out of adjustment fault being sensed by sensing a first pre-defined indicia on said pushrod in response to sensing air pressure correlated with normal actuated position of said brake actuator and sensing a second, different, pre-defined indicia on said pushrod in response to sensing air pressure correlated with normal actuated position of said brake actuator; and detecting a plurality of non-functioning conditions each by sensing pre-defined indicia on said pushrod in response to sensing air pressure correlated with normal actuated pressure of said brake actuator; and wherein detecting said plurality of pre-cursor out of adjustment faults and said plurality of non-functioning faults occurs during a power ignition cycle of a vehicle. Also, said step of sensing variation of said indicia might be further defined by sensing variation of reflectivity of said indicia. Also, said step of sensing variation of reflectivity of said indicia might be further defined by sensing linear variation of reflectivity of said indicia. Also, said step of sensing variation of reflectivity of said indicia might be further defined by sensing a plurality of distinctive surfaces of said indicia, each surface might have differing amounts of reflectivity.

In another further example a vehicle brake monitor assembly is described comprising: a brake actuator having a pushrod slidably extending from a chamber of said brake actuator, said pushrod actuating a lever arm thereby moving the vehicle brake into an actuated position when said pushrod is disposed in an extended position and allowing the vehicle brake to move into a retracted position when said pushrod is disposed in a retracted position; a pressure sensor for sensing pressure from actuating a brake pedal; an optical sensor transmitting a light signal toward the pushrod and sensing an amount of reflectivity; a controller programmed to determine which of a plurality of fault conditions of said brake actuator is present dependent upon output from said pressure sensor and said optical sensor. Also, said controller may correlate air pressure with amount of reflectivity thereby determining if said actuator is in a normal condition or a fault condition. Also, said pushrod may include indicia indicative of a normal actuated position, a normal retracted position, and an over-stroke position. Also, said controller may determine a normal condition is present by sensing said amount of reflectivity indicative of said normal actuated position in response to sensing air pressure correlated with normal actuated position of said brake actuator. Also, said controller may determine an over-stroke condition is present by sensing said amount of reflectivity indicative of said over-stroke position in response to sensing air pressure correlated with normal actuated position of said brake actuator. Also, said controller may determine a non-functioning condition is present by sensing said amount of reflectivity indicative of said retracted position in response to sensing air pressure correlated with normal actuated position of said brake actuator. Also, said controller may determine an out of adjustment condition is present by: sensing said amount of reflectivity indicative of said normal position in response to sensing air pressure correlated with normal actuated position of said brake actuator; and sensing said amount of reflectivity indicative of said retracted position in response to sensing air pressure correlated with normal actuated position of said brake actuator. Also, said controller might be programmed to determine an out of adjustment condition is present by: detecting a plurality of pre-cursor out of adjustment faults each pre-cursor out of adjustment fault being sensed during a brake actuation by: sensing said amount of reflectivity indicative of said normal position in response to sensing air pressure correlated with normal actuated position of said brake actuator; and sensing said amount of reflectivity indicative of said retracted position in response to sensing air pressure correlated with normal actuated position of said brake actuator for a pre-determined amount of time; and detecting a plurality of non-functioning conditions each by sensing said amount of reflectivity indicative of said retracted position in response to sensing air pressure correlated with normal actuated pressure of said brake actuator; and wherein detecting said plurality of pre-cursor out of adjustment faults and said plurality of non-functioning faults occurs during a power ignition cycle of a vehicle. Also, said indicia indicative of said normal retracted position and said indicia indicative of said over-stroke position might be substantially similar indicia. Also, said controller might be programmed to distinguish between an over-stroke condition and an out of adjustment condition by monitoring said amount of reflectivity during a return stroke of said pushrod. Also, said controller might be programmed to distinguish between said over-stroke condition and said out of adjustment condition by sensing said amount of reflectivity indicative of said normal position during said return stroke of said pushrod.

## Claims

1. A method of detecting a fault condition of an air disk brake, comprising the steps of:
providing a brake actuator (10) having a pushrod (14) being extensible from said brake actuator (10) for actuating a lever arm (34) of an air disk brake;
monitoring length of extension of said pushrod (14) from said brake actuator (10);
monitoring air pressure of said brake actuator (10);
detecting an out of adjustment fault condition of an air disk brake based on said monitoring length of extension of said pushrod (14) of said brake actuator (10) and said monitoring air pressure of said brake actuator (10) without sensing a condition of the air disk brake, **characterized by** further including the step of correlating air pressure of said brake actuator (10) with a normal actuated position and a normal retracted position, wherein a normal condition, an over-stroke condition, and a non-functioning condition is detected by sensing pre-defined indicia on said pushrod (14) in response to sensing air pressure correlated with normal actuated position of said brake actuator (10).

2. The method set forth in claim 1, wherein said step of monitoring length of extension of said pushrod (14) is further defined by sensing variation of indicia disposed upon said pushrod (14).

3. The method set forth in claim 1, including determining whether a fault condition is said out of adjustment fault condition or said over-stroke condition based on said monitoring length of extension of said pushrod (14) and said monitoring air pressure of said brake actuator (10) during a return stroke of said pushrod (14).

4. The method set forth in claim 1, wherein detecting said out of adjustment fault condition includes sensing a first pre-defined indicia on said pushrod (14) in response to sensing air pressure correlated with normal actuated position of said brake actuator (10) and sensing a second pre-defined indicia on said pushrod (14) in response to sensing air pressure correlated with normal actuated position of said brake actuator (10).

5. The method set forth in claim 1, wherein detecting said out of adjustment fault condition includes:
detecting a plurality of pre-cursor out of adjustment faults each pre-cursor out of adjustment fault being sensed by sensing a first pre-defined indicia on said pushrod (14) in response to sensing air pressure correlated with normal actuated position of said brake actuator (10) and sensing a second, different, pre-defined indicia on said pushrod (14) in response to sensing air pressure correlated with normal actuated position of said brake actuator (10); and
detecting a plurality of non-functioning conditions each by sensing pre-defined indicia on said pushrod (14) in response to sensing air pressure correlated with normal actuated pressure of said brake actuator (10); and
wherein detecting said plurality of pre-cursor out of adjustment faults and said plurality of non-functioning faults occurs during a power ignition cycle of a vehicle.

6. The method set forth in claim 2, wherein said step of sensing variation of said indicia is further defined by sensing variation of reflectivity of said indicia.

7. The method set forth in claim 6, wherein said step of sensing variation of reflectivity of said indicia is further defined by sensing linear variation of reflectivity of said indicia, and/or by sensing a plurality of distinctive surfaces of said indicia, each surface having differing amounts of reflectivity.

8. A vehicle brake monitor assembly (12) comprising:
a brake actuator (10) having a pushrod (14) slidably extending from a chamber of said brake actuator (10), said pushrod (14) actuating a lever arm (34) thereby moving the vehicle brake into an actuated position when said pushrod (14) is disposed in an extended position and allowing the vehicle brake to move into a retracted position when said pushrod (14) is disposed in a retracted position;
a pressure sensor (32) for sensing pressure from actuating a brake pedal;
an optical sensor (66) transmitting a light signal toward the pushrod (14) and sensing an amount of reflectivity;
a controller (72) programmed to determine which of a plurality of fault conditions of said brake actuator (10) is present dependent upon output from said pressure sensor (32) and said optical sensor (66), **characterized in that** said pushrod (14) includes indicia indicative of a normal actuated position, a normal retracted position, and an over-stroke position, wherein said controller (72) determines a normal condition, an over-stroke condition, and a non-functioning condition is present by sensing said amount of reflectivity indicative of said normal actuated position in response to sensing air pressure correlated with normal actuated position of said brake actuator (10).

9. The assembly (12) set forth in claim 8, wherein said controller (72) correlates air pressure with amount of reflectivity thereby determining if said actuator is in a normal condition or a fault condition.

10. The assembly (12) set forth in claim 9, wherein said controller (72) determines an out of adjustment condition is present by:
sensing said amount of reflectivity indicative of said normal position in response to sensing air pressure correlated with normal actuated position of said brake actuator (10); and
sensing said amount of reflectivity indicative of said retracted position in response to sensing air pressure correlated with normal actuated position of said brake actuator (10).

11. The assembly (12) set forth in claim 9, wherein said controller (72) is programmed to determine an out of adjustment condition is present by:
detecting a plurality of pre-cursor out of adjustment faults each pre-cursor out of adjustment fault being sensed during a brake actuation by:
sensing said amount of reflectivity indicative of said normal position in response to sensing air pressure correlated with normal actuated position of said brake actuator (10); and
sensing said amount of reflectivity indicative of said retracted position in response to sensing air pressure correlated with normal actuated position of said brake actuator (10) for a pre-determined amount of time; and
detecting a plurality of non-functioning conditions each by sensing said amount of reflectivity indicative of said retracted position in response to sensing air pressure correlated with normal actuated pressure of said brake actuator (10); and
wherein detecting said plurality of pre-cursor out of adjustment faults and said plurality of non-functioning faults occurs during a power ignition cycle of a vehicle.

12. The assembly (12) set forth in claim 9, wherein said indicia indicative of said normal retracted position and said indicia indicative of said over-stroke position are substantially similar indicia.

13. The assembly (12) set forth in claim 12, wherein said controller (72) is programmed to distinguish between an over-stroke condition and an out of adjustment condition by monitoring said amount of reflectivity during a return stroke of said pushrod (14), and/or by sensing said amount of reflectivity indicative of said normal position during said return stroke of said pushrod (14).

## Patentansprüche

1. Ein Verfahren zum Detektieren eines Fehlerzustands von einer Luftdruck-Scheibenbremse aufweisend die Schritte von:
Bereitstellen eines Bremszylinders (10), der eine Kolbenstange (14) besitzt, die ausziehbar aus dem Bremszylinder (10) ist zum Antreiben eines Hebelarms (34) von einer Luftdruck-Scheibenbremse;
Überwachen einer Länge des Auszugs von der Kolbenstange (14) von dem Bremszylinder (10);
Überwachen von Luftdruck von dem Bremszylinder (10);
Detektieren eines außerhalb der Abstimmung-Fehlerzustands von der Luftdruck-Scheibenbremse basierend auf der überwachten Länge des Auszugs von der Kolbenstange (14) von dem Bremszylinder (10) und dem Überwachen des Luftdrucks von dem Bremszylinder (10) ohne einen Zustand von der Luftdruck-Scheibenbremse abzutasten **gekennzeichnet durch**
weiter umfassend den Schritt von Korrelieren von Luftdruck von dem Bremszylinder (10) mit einer normalen angetriebenen Position und einer normalen zurückgezogenen Position, wobei ein normaler Zustand, ein Überhub-Zustand und ein Fehlfunktionszustand detektiert werden durch Abtasten vordefinierter Zeichen von der Kolbenstange (14) in Antwort auf Abtasten von Luftdruck korreliert mit der normalen angetriebenen Position von dem Bremszylinder (10).

2. Das Verfahren von Anspruch 1, wobei der Schritt von Überwachen der Länge des Auszugs von der Kolbenstange (14) weiter definiert ist durch Abtasten einer Variation von Zeichen verteilt über die Kolbenstange (14).

3. Das Verfahren von Anspruch 1, umfassend Bestimmen ob ein Fehlerzustand der außerhalb der Abstimmung-Fehlerzustand ist oder der Überhubzustand ist basierend auf Überwachen von Länge des Auszugs von der Kolbenstange (14) und dem Überwachen von Luftdruck von dem Bremszylinder (10) während eines Zurückziehens von der Kolbenstange (14).

4. Das Verfahren von Anspruch 1, wobei Detektieren des Fehlerzustands, der außerhalb der Abstimmung liegt, umfasst Abtasten eines ersten vordefinierten Zeichens auf der Kolbenstange (14) in Antwort auf Abtasten von Luftdruck korreliert mit normaler angetriebener Position von dem Bremszylinder (10) und Abtasten eines zweiten Zeichens auf der Kolbenstange (14) in Antwort auf Abtasten von Luftdruck korreliert mit normaler angetriebener von dem Bremszylinder (10).

5. Das Verfahren von Anspruch 1, wobei Detektieren des außerhalb der Abstimmung-Fehlerzustands umfasst:
Detektieren einer Vielzahl von Vorläufer-außerhalb der Abstimmung-Fehlern, wobei jeder Vorläufer-außerhalb der Abstimmung-Fehler abgetastet wird durch Abtasten eines ersten vordefinierten Zeichens auf der Kolbenstange (14) in Antwort auf Abtasten von Luftdruck korreliert mit normaler angetriebener Position von dem Bremszylinder (10) und Abtasten eines zweiten, verschiedenen, vordefinierten Zeichens auf der Kolbenstange (14) in Antwort auf Abtasten von Luftdruck korreliert mit normaler angetriebener Position von dem Bremszylinder (10); und
Detektieren einer Vielzahl von Fehlfunktionszuständen jeweils durch Abtasten von vordefinierten Zeichen auf der Kolbenstange (14) in Antwort auf Abtasten von Luftdruck korreliert mit normalem angetriebenen Druck von dem Bremszylinder (10); und
wobei Detektieren der Vielzahl von Vorläufer-außerhalb der Abstimmung-Fehler und der Vielzahl von Fehlfunktionsfehlern auftritt während eines Zündzyklus von einem Fahrzeug.

6. Das Verfahren von Anspruch 2, wobei der Schritt von Abtasten von Variation von dem Zeichen weiter definiert ist durch Abtasten von Variation von Reflektivität von dem Zeichen.

7. Das Verfahren von Anspruch 6, wobei der Schritt von Abtasten von Variation von Reflektivität von dem Zeichen weiter definiert ist durch Abtasten einer linearen Variation von Reflektivität von dem Zeichen und/oder durch Abtasten einer Vielzahl von unterscheidbaren Oberflächen von dem Zeichen, wobei jede Oberfläche ein verschiedenes Maß an Reflektivität besitzt.

8. Eine Fahrzeug-Bremsenüberwachungsanordnung (12) aufweisend:
einen Bremszylinder (10) aufweisend eine Kolbenstange (14), welche sich verschiebbar aus einer Kammer von dem Bremszylinder (10) herauszieht, wobei die Kolbenstange (14) einen Hebelarm (34) antreibt, dadurch die Fahrzeugbremse in eine angetriebene Position bewegt, wenn die Kolbenstange (14) in einer ausgezogenen Position angeordnet ist, und der Fahrzeugbremse erlaubt sich in eine zurückgezogene Position zu bewegen wenn die Kolbenstange (14) in einer zurückgezogenen Position angeordnet ist;
einen Drucksensor (32) zum Abtasten von Druck durch Betätigen eines Bremspedals;
einen optischen Sensor (66), der ein Lichtsignal gegen die Kolbenstange (14) sendet und ein Maß an Reflektivität bestimmt;
eine Steuereinheit (72), die programmiert ist zum Bestimmen welcher von einer Vielzahl von Fehlerzuständen von dem Bremszylinder (10) vorliegt abhängig von einer Ausgabe von dem Drucksensor (32) und dem optischen Sensor (66),
**gekennzeichnet dadurch, dass**
die Kolbenstange (14) umfasst Zeichen, die anzeigen eine normale angetriebene Position, eine normale zurückgezogene Position und eine Überhubposition, wobei die Steuereinheit (72) bestimmt ob ein normaler Zustand, ein Überhubzustand und ein Fehlfunktionszustand vorliegt durch Abtasten des Maßes von Reflektivität anzeigend die normale angetriebene Position in Antwort auf Abtasten von Luftdruck korreliert mit normaler angetriebener Position von dem Bremszylinder (10).

9. Die Anordnung (12) von Anspruch 9, wobei die Steuereinheit (72) korreliert Luftdruck mit einem Maß an Reflektivität durch Bestimmen ob der Zylinder in einem normalen Zustand oder einem Fehlerzustand ist.

10. Die Anordnung (12) von Anspruch 9, wobei die Steuereinheit (72) bestimmt ob ein außerhalb einer Abstimmung-Zustand vorliegt durch:
Abtasten des Maßes an Reflektivität anzeigend die normale Position in Antwort auf Abtasten von Luftdruck korreliert mit normaler angetriebener Position von dem Bremszylinder (10); und
Abtasten des Maßes an Reflektivität anzeigend die zurückgezogene Position in Antwort auf Abtasten von Luftdruck korreliert mit normaler angetriebener Position von dem Bremszylinder (10).

11. Die Anordnung (12) aus Anspruch 9, wobei die Steuereinheit (72) programmiert ist zum Bestimmen ob ein außerhalb der Abstimmung-Zustand vorliegt durch:
Detektieren einer Vielzahl von Vorläufer-außerhalb der Abstimmung-Fehlern, wobei jeder Vorläufer-außerhalb der Abstimmung-Fehler abgetastet wird während eines Bremsvorgangs durch:
Abtasten des Maßes an Reflektivität anzeigend die normale Position in Antwort auf Abtasten von Luftdruck korreliert mit normaler angetriebener Position von dem Bremszylinder (10); und
Abtasten des Maßes an Reflektivität anzeigend die zurückgezogene Position in Antwort auf Abtasten von Luftdruck korreliert mit normaler angetriebener Position von dem Bremszylinder (10) für eine vorbestimmte Zeitdauer; und
Detektieren einer Vielzahl von Fehlfunktionszuständen jeweils durch Abtasten des Maßes an Reflektivität anzeigend die zurückgezogene Position in Antwort auf Abtasten von Luftdruck korreliert mit normalem angetriebenen Druck von dem Bremszylinder (10); und
wobei Detektieren der Vielzahl von Vorläufer-außerhalb der Abstimmung-Fehler und der Vielzahl von Fehlfunktionsfehlern auftritt während eines Zündzyklus von einem Fahrzeug.

12. Die Anordnung (12) von Anspruch 9, wobei das Zeichen anzeigend die normale angetriebene Position und das Zeichen anzeigend die ÜberhubPosition im Wesentlichen ähnliche Zeichen sind.

13. Die Anordnung (12) von Anspruch 12, wobei die Steuereinheit (72) programmiert ist zum Unterscheiden zwischen einem Überhub-Zustand und einem außerhalb der Abstimmung-Zustand durch Überwachen des Maßes an Reflektivität während eines Zurückziehens von der Kolbenstange (14) und/oder durch Abtasten des Maßes an Reflektivität anzeigend die normale Position während des Zurückziehens von der Kolbenstange (14).

## Revendications

1. Procédé de détection d'une condition de panne d'un frein à disque à air, comprenant les étapes de :
fourniture d'un actionneur de frein (10) ayant une tige de poussée (14) étant extensible dudit actionneur de frein (10) pour actionner un bras de levier (34) d'un frein à disque à air ;
surveillance de la longueur d'extension de ladite tige de poussée (14) dudit actionneur de frein (10) ;
surveillance de la pression d'air dudit actionneur de frein (10) ;
détection d'une condition de défaut de réglage d'un frein à disque à air sur la base de ladite surveillance de la longueur d'extension de ladite tige de poussée (14) dudit actionneur de frein (10) et de ladite surveillance de la pression d'air dudit actionneur de frein (10) sans la détection d'une condition du frein à disque à air,
**caractérisé en ce qu'**il inclut en outre l'étape de mise en corrélation de la pression d'air dudit actionneur de frein (10) avec une position actionnée normale et une position rétractée normale, dans lequel une condition normale, une condition de course excessive, et une condition de non-fonctionnement sont détectées en détectant des indices prédéfinis sur ladite tige de poussée (14) en réponse à la détection de la pression d'air corrélée avec la position actionnée normale dudit actionneur de frein (10).

2. Procédé selon la revendication 1, dans lequel ladite étape de surveillance de la longueur d'extension de ladite tige de poussée (14) est en outre définie par la détection de la variation d'indices disposés sur ladite tige de poussée (14).

3. Procédé selon la revendication 1, incluant le fait de déterminer si une condition de panne est ladite condition de défaut de réglage ou ladite condition de course excessive sur la base de ladite surveillance de la longueur d'extension de ladite tige de poussée (14) et de ladite surveillance de la pression d'air dudit actionneur de frein (10) pendant une course de retour de ladite tige de poussée (14).

4. Procédé selon la revendication 1, dans lequel la détection de ladite condition de défaut de réglage inclut la détection d'un premier indice prédéfini sur ladite tige de poussée (14) en réponse à la détection de la pression d'air corrélée avec la position actionnée normale dudit actionneur de frein (10) et la détection d'un second indice prédéfini sur ladite tige de poussée (14) en réponse à la détection de la pression d'air corrélée avec la position actionnée normale dudit actionneur de frein (10).

5. Procédé selon la revendication 1, dans lequel la détection de ladite condition de défaut de réglage inclut :
la détection d'une pluralité de pannes de défaut de réglage de précurseur chaque panne de défaut de réglage de précurseur étant détectée par détection d'un premier indice prédéfini sur ladite tige de poussée (14) en réponse à la détection de la pression d'air corrélée avec la position actionnée normale dudit actionneur de frein (10) et la détection d'un second indice prédéfini, différent, sur ladite tige de poussée (14) en réponse à la détection de la pression d'air corrélée avec la position actionnée normale dudit actionneur de frein (10) ; et
la détection d'une pluralité de conditions de non-fonctionnement chacune par la détection d'indices prédéfinis sur ladite tige de poussée (14) en réponse à la détection de la pression d'air corrélée avec la pression actionnée normale dudit actionneur de frein (10) ; et
dans lequel la détection de ladite pluralité de pannes de défaut de réglage de précurseur et de ladite pluralité de pannes de non-fonctionnement survient pendant un cycle de démarrage d'un véhicule.

6. Procédé selon la revendication 2, dans lequel ladite étape de détection de la variation desdits indices est en outre définie par la détection de la variation de la réflectivité desdits indices.

7. Procédé selon la revendication 6, dans lequel ladite étape de détection de la variation de la réflectivité desdits indices est en outre définie par la détection de la variation linéaire de la réflectivité desdits indices, et/ou par la détection d'une pluralité de surfaces distinctives desdits indices, chaque surface ayant des quantités différentes de réflectivité.

8. Ensemble de surveillance de frein de véhicule (12) comprenant :
un actionneur de frein (10) ayant une tige de poussée (14) s'étendant de manière coulissante depuis une chambre dudit actionneur de frein (10), ladite tige de poussée (14) actionnant un bras de levier (34), déplaçant ainsi le frein de véhicule dans une position actionnée quand ladite tige de poussée (14) est disposée dans une position étendue et permettant au frein de véhicule de se déplacer dans une position rétractée quand ladite tige de poussée (14) est disposée dans une position rétractée ;
un détecteur de pression (32) pour détecter la pression de l'actionnement d'une pédale de frein ;
un détecteur optique (66) transmettant un signal lumineux vers la tige de poussée (14) et détectant une quantité de réflectivité ;
un contrôleur (72) programmé pour déterminer laquelle d'une pluralité de conditions de panne dudit actionneur de frein (10) est présente en fonction des valeurs de sortie dudit détecteur de pression (32) et dudit détecteur optique (66), **caractérisé en ce que** ladite tige de poussée (14) inclut des indices indicatifs d'une position actionnée normale, d'une position rétractée normale, et d'une position de course excessive, dans lequel ledit contrôleur (72) détermine qu'une condition normale, une condition de course excessive, et une condition de non-fonctionnement sont présentes en détectant ladite quantité de réflectivité indicative de ladite position actionnée normale en réponse à la détection de la pression d'air corrélée avec la position actionnée normale dudit actionneur de frein (10).

9. Ensemble (12) selon la revendication 8, dans lequel ledit contrôleur (72) corrèle la pression d'air avec la quantité de réflectivité, déterminant ainsi si ledit actionneur se trouve dans une condition normale ou une condition de panne.

10. Ensemble (12) selon la revendication 9, dans lequel ledit contrôleur (72) détermine qu'une condition de défaut de réglage est présente en :
détectant ladite quantité de réflectivité indicative de ladite position normale en réponse à la détection de la pression d'air corrélée avec la position actionnée normale dudit actionneur de frein (10) ; et
en détectant ladite quantité de réflectivité indicative de ladite position rétractée en réponse à la détection de la pression d'air corrélée avec la position actionnée normale dudit actionneur de frein (10).

11. Ensemble (12) selon la revendication 9, dans lequel ledit contrôleur (72) est programmé pour déterminer qu'une condition de défaut de réglage est présente en :
détectant une pluralité de pannes de défaut de réglage de précurseur, chaque panne de défaut de réglage de précurseur étant détectée pendant l'actionnement d'un frein en :
détectant ladite quantité de réflectivité indicative de ladite position normale en réponse à la détection de la pression d'air corrélée avec la position actionnée normale dudit actionneur de frein (10) ; et
détectant ladite quantité de réflectivité indicative de ladite position rétractée en réponse à la détection de la pression d'air corrélée avec la position actionnée normale dudit actionneur de frein (10) pour une durée prédéterminée ; et
détectant une pluralité de conditions de non-fonctionnement, chacune par la détection de ladite quantité de réflectivité indicative de ladite position rétractée en réponse à la détection de la pression d'air corrélée avec la pression actionnée normale dudit actionneur de frein (10) ; et
dans lequel la détection de ladite pluralité de pannes de défaut de réglage de précurseur et de ladite pluralité de pannes de non-fonctionnement survient pendant un cycle de démarrage d'un véhicule.

12. Ensemble (12) selon la revendication 9, dans lequel lesdits indices indicatifs de ladite position rétractée normale et lesdits indices indicatifs de ladite position de course excessive sont des indices sensiblement identiques.

13. Ensemble (12) selon la revendication 12, dans lequel ledit contrôleur (72) est programmé pour distinguer une condition de course excessive d'une condition de défaut de réglage en surveillant ladite quantité de réflectivité pendant une course de retour de ladite tige de poussée (14), et/ou en détectant ladite quantité de réflectivité indicative de ladite position normale pendant ladite course de retour de ladite tige de poussée (14).
